# EUROPEAN PATENT SPECIFICATION

(11) **EP 4 421 353 B1**
(45) Date of publication and mention of the grant of the patent: **12.11.2025**
(21) Application number: 23158257.8
(22) Date of filing: 23.02.2023
(51) Int. Cl.: F16H 57/028, F16H 57/031, F16H 63/30, F16H 57/02, F16H 61/30

(54) **GEAR BOX CONTROL ARRANGEMENT FOR AN AUTOMATED MANUAL TRANSMISSION SYSTEM OF A VEHICLE, IN PARTICULAR UTILITY VEHICLE, AUTOMATED MANUAL TRANSMISSION SYSTEM, AND VEHICLE, IN PARTICULAR UTILITY VEHICLE**
GETRIEBESTEUERUNGSANORDNUNG FÜR EIN AUTOMATISIERTES SCHALTGETRIEBE EINES FAHRZEUGS, INSBESONDERE NUTZFAHRZEUG, AUTOMATISIERTES SCHALTGETRIEBE UND FAHRZEUG, INSBESONDERE NUTZFAHRZEUG
DISPOSITIF DE COMMANDE DE BOÎTE DE VITESSES POUR UN SYSTÈME DE TRANSMISSION AUTOMATIQUE DE VÉHICULE, EN PARTICULIER VÉHICULE UTILITAIRE, ET VÉHICULE, EN PARTICULIER VÉHICULE UTILITAIRE

(43) Date of publication of application: 28.08.2024
(73) Proprietor: ZF CV Systems Europe BV, 1170 Brüssel (BE)
(72) Inventor: SALATYCKI, Mateusz, 45-223 Opole (PL); SALIK, Jakub, 53-306 Wroclaw (PL)
(74) Representative: Ohlendorf, Henrike

(56) References cited:
- EP-A1- 2 698 546
- EP-A1- 2 843 267
- DE-A1- 102016 012 854
- GB-A- 759 235

## Description

The present invention relates to a gear box control arrangement for an automated manual transmission system of a vehicle, in particular utility vehicle, comprising a cover, a housing for enclosing a pushrod being movable by a main piston, an annular stop bushing circumferentially enclosed by the housing and adapted to define a neutral position, in an axial direction, of the main piston within the housing. The invention further relates to an automated manual transmission system of a vehicle, in particular utility vehicle, and to a vehicle, in particular utility vehicle.

An automated manual transmission, AMT, system is known in the prior art. An AMT system is generally lighter than automatic transmission so that a vehicle with an AMT system may increase the payload by having less total vehicle weight. Such an AMT system may comprise an electronic control unit to shift gears which may enhance the shifting performance compared to a manual transmission.

A gear and/or a driving mode may be selected by a mechanical actuation of a gear box by the pushrod which may move under the application of, e.g., pressurized air. Therein, the application of pressurized air may deflect, depending on the application of the pressurized air, the main piston which moves the push rod, along an axial direction, from a neutral position into an extraction position or into a retraction position. The neutral position may be defined by the annular stop bushing. The gear box control arrangement may comprise a plurality of parts which may move relative to each other and which are arranged within the housing.

A gear box control arrangement according to the prior art may lead to play between parts which move relative to each other and/or are arranged within the housing. The play may potentially cause problems in selecting of and maintaining a gear due to vibrations, may cause noise and may lead to a deteriorated performance of the gear box control arrangement over its lifetime.

GB 759 235 A relates to a pressure medium actuated piston, more particularly for gear changing for motor vehicles which can be brought selectively by the supply- of pressure medium into one of the two extreme positions. EP 2 698 546 A1 relates to a four-state fluid cylinder, wherein the cylinder has a cylinder housing with a first end and an opposite second end and a piston rod protruding from the first end of the cylinder housing. Document DE102016012854A1 also discloses a gear box control arrangement.

The problem of the invention is to provide a technological contribution to the art. A specific embodiment of the present invention may solve the problem of providing a gear box control arrangement which minimizes vibrations.

According to an aspect of the present invention, a gear box control arrangement for an automated manual transmission system of a vehicle, in particular utility vehicle, is provided. The gear box control arrangement comprises a cover, a housing for enclosing a main piston and a pushrod being movable by the main piston, an annular stop bushing circumferentially enclosed by the housing and adapted to define a neutral position, in an axial direction, of the main piston within the housing, and an elastic retaining element being arranged and adapted to exert a force, in the axial direction, on the stop bushing.

Therein, the housing encloses the main piston, the pushrod and the annular stop bushing. The annular stop bushing defines the neutral position of the pushrod, i.e., a position of the pushrod being in a undeflected and/or unactuated state. The pushrod may achieve the neutral position in the absence of a force which deflects the main piston and thereby the pushrod.

Thus, in the neutral position, the main piston is supported by the annular bushing. It is realized that a movement and/or play of the bushing may cause vibrations. Therein, the play may arise from a free axial movement of the stop bushing. To reduce, minimize and/or prevent free axial movement, the gear box control arrangement comprises the elastic retaining element. The elastic retaining element is adapted to retain the stop bushing in a well-defined position with reduced and/or without play. The elastic retaining element may constrain the axial movement of the stop bushing and thereby reduce free axial movement. The elastic retaining element may be deformed, e.g., compressed, along the axial direction by the stop bushing and/or forces acting on the stop bushing and thus on the retaining element. The deformation of the elastic element may lead to an elastic force being exerted in the axial direction on the stop bushing and thereby leads to a support of the stop bushing by the retaining element and avoids free axial movement.

The gear box control arrangement may achieve a reduction of vibrations acting on the device, a reduction of noise caused by vibrations, a robust and compact appearance, a reduction of parts which may wear out and an increase of positioning accuracy of the neutral position of the push rod.

According to the invention, the elastic retaining element is a spring washer. The spring washer may be a Belleville spring, a curved disc spring, a wave washer, a split washer or a combination thereof. The spring washer may compensate tolerances and thereby prevent play. The spring washer may be made of metal. Alternatively, the elastic retaining element may be a rubber washer and/or plastically deformed metal ring. However, the spring washer may have a better performance than the rubber washer and may be more versatile and/or suitable for more applications than the plastically deformed metal ring which may require a highly specific design and more construction space.

Optionally, the spring washer comprises at least two windings. The windings may lead to improved elastic properties. The design and number of the windings may determine the force which may act on the bushing.

Optionally, the elastic retaining element is arranged circumferentially around and/or radially outwardly from the main piston. The circumferential arrangement of the elastic retaining element may lead to an essentially homogeneously distributed force acting in the axial direction and along the circumference of the main piston and thereby along the circumference of the annular bushing. The arrangement of the elastic retaining element radially outwardly from the main piston may facilitate the arrangement of the elastic retaining element. Optionally, the elastic retaining element is arranged circumferentially around and radially outwardly from the annular bushing.

Optionally, the force pushes the stop bushing against a first narrowing of the housing.

Therein, the stop bushing may be supported by and arranged, in the axial direction, between the first narrowing and the elastic retaining element. The first narrowing may be a section of the housing in which an inner cross section decreases. The stop bushing may have a cross section larger than the first narrowing and may therefore be supported by the first narrowing. Alternatively, the force pushes the stop bushing against a radially extended support surface of the cover. Therein, the stop bushing may be supported by and arranged, in the axial direction, between the cover and the elastic retaining element. These embodiments reduce a free movement of the stop bushing and may prevent play.

According to the present invention, the housing comprises a first narrowing, and the stop bushing is supported and/or confined by the first narrowing. The first narrowing may be a section of the housing in which an inner cross section of the housing decreases from a first cross section to a second cross section. The stop bushing may be supported and/or confined by the first narrowing, wherein the second cross section is smaller than a cross section of the stop bushing. This may enable an efficient support of the stop bushing.

Optionally, the cover comprises a radially extended support surface and retaining element or the stop bushing is supported by the support surface. The support surface may be a counterpart for a first narrowing of the housing. The bushing and the elastic element may be arranged between the support surface and the first narrowing.

According to an aspect of the present invention, an automated manual transmission system of a vehicle, in particular utility vehicle, is provided. The automated manual transmission system comprises the gear box control arrangement as described above. The automated manual transmission system comprises a gear box. The gear box control arrangement is adapted to control the gear box. The pushrod of the gear box control arrangement is adapted to be deflected and/or moved to perform an actuation of the gear box, e.g., to change and/or select a gear Therein, the automated manual transmission system may comprise one or more of the above described optional and/or preferable features to achieve a technical effect associated therewith.

According to an aspect of the present invention vehicle, in particular utility vehicle, is provided. Therein, the vehicle, in particular utility vehicle comprises the gear box control arrangement as described above and/or the automated manual transmission system as described above. Therein, the automated manual transmission system may comprise one or more of the above described optional and/or preferable features to achieve a technical effect associated therewith.

The invention is hereinafter described in detail with reference to the appended drawings, in which:
- Fig. 1: shows a schematic of a vehicle, in particular utility vehicle, according to an aspect of the present invention;
- Fig. 2: shows a schematic sectional view of a gear box control arrangement according to an aspect of the present invention; and
- Fig. 3: shows a perspective view of a spring washer of a gear box control arrangement according to an aspect of the present invention.

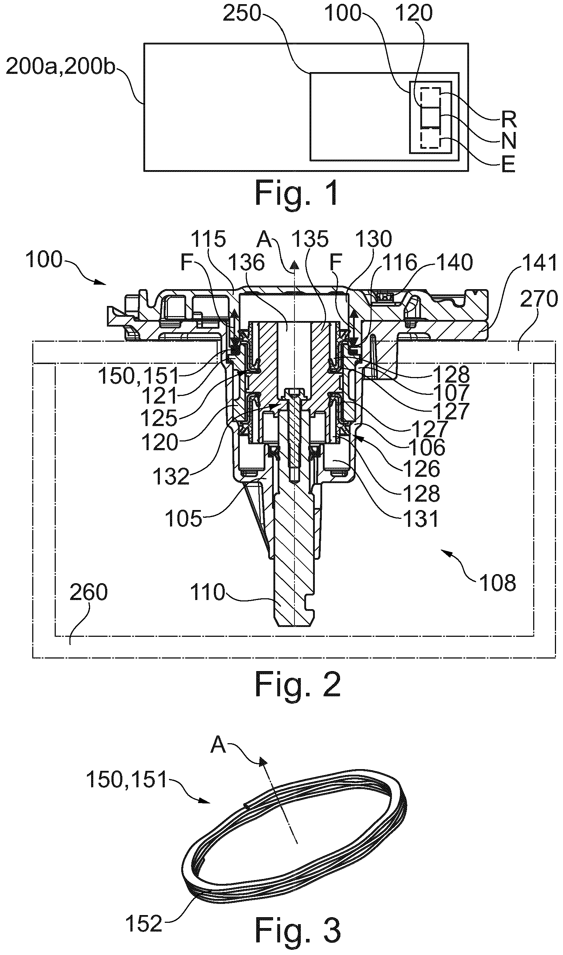

Figure 1 shows a schematic of a vehicle 200a, in particular utility vehicle 200b, according to an aspect of the present invention. In the following, the vehicle 200a, in particular utility vehicle 200b, is referred to as vehicle 200a, 200b. The vehicle 200a, 200b is a land vehicle. For example, the vehicle 200a, 200b is a truck and/or a bus.

The vehicle 200a, 200b comprises an automated manual transmission system 250. The automated manual transmission system 250 comprises a gear box control arrangement 100.

The gear box control arrangement 100 comprises a pushrod 120 to control the automated transmission system 250. To control the automated transmission system 250, the pushrod 120 is adapted to be deflected from a neutral position N into a retraction position R or into an extraction position E (see also description of Figure 2). The gear box control arrangement 100 is also called gear box control unit. The gear box control arrangement 100 is further described with reference to Figure 2.

Figure 2 shows a schematic sectional view of a gear box control arrangement 100 according to an aspect of the present invention. The gear box control arrangement 100 is a box control arrangement 100 for a vehicle 200a, 200b as described with reference to Figure 1.

In Figure 2, the gear box control arrangement 100 comprises a cover 115 and a housing 105. The gear box control arrangement 100 comprises a screw or a bolt as a mounting member 140 to mount the cover 115 and the housing 105 together. The cover 115 is made of metal, e.g., aluminum.

The housing 105 comprises a flange 141 which is mounted (not shown) to a schematically indicated gear box cover 270 of a gear box 260. The housing 105 comprises an annular portion 108 which protrudes from the flange 141 into the gear box 260. The annular portion 108 is arranged within the gear box 260. The flange 141 is arrange outside the gear box 260.

The gear box control arrangement 100 comprises a main piston 135 and a pushrod 110 being movable by the main piston 135. The push rod 110 protrudes into the gear box 260 and is adapted to engage with an actuation mechanism (not shown) of the gear box 260 to actuate the gear box 260. To perform an actuation of the gear box 260, the push rod 110 is adapted to be deflected from a neutral position **N,** in an axial direction A, to protrude further into to gear box 260 in an extraction position E or to protrude less into to gear box 260 in a retraction position R. Thus, the main piston 135 and the pushrod 110 are slidably arranged within the housing 105, wherein the main piston 135 and the pushrod 110 slide along the axial direction A. The main piston 135 and the pushrod 110 may be fixedly mounted together.

The gear box control arrangement 100 comprises a first pressure chamber 130, a second pressure chamber 131, a pressure channel 136 and a schematically illustrated valve arrangement 132. Each of the first pressure chamber 130 and the second pressure chamber 131 may be impinged with pressurized air.

Pressurized air in the first pressure chamber 130 deflects the main piston 135 and the pushrod 110 along the axial direction A towards the gear box 260, i.e., in this representation downwards, in the extraction position E. Pressurized air in the second pressure chamber 131 deflects the main piston 135 and the to pushrod 110 along the axial direction A away from the gear box 260, i.e., in this representation upwards, in the retraction position R.

The box control arrangement 100 comprises an annular stop bushing 120 adapted to define the neutral position N, in an axial direction A, of the main piston 135 within the housing 105. The neutral position N is between the extraction position E and the retraction position R.

The main piston 135, pushrod 110 and the stop bushing 120 are arranged within the housing 115. The main piston 135 and the stop bushing 120 are circumferentially enclosed by the housing 105.

The box control arrangement 100 comprises a first auxiliary piston 125 and a second auxiliary piston 126. Each of the first auxiliary piston 125 and the second auxiliary piston 126 is arranged radially outwardly from the main piston 135. Each of the first auxiliary piston 125 and the second auxiliary piston 126 comprises a sheet metal member 127 and a rubber member 128. The sheet metal members 127 provide the auxiliary pistons 125, 126 with mechanical stability and enable a mechanical interaction of the auxiliary pistons 125, 126 with the main piston 135. The first auxiliary piston 125 is adapted to move together with the main piston 135 from the neutral position N to the retraction position R. The second auxiliary piston 126 is adapted to move together with the main piston 135 from the neutral position N to the extraction position E. The first auxiliary piston 125, i.e., its sheet metal 127, and the stop bushing 120 define an upper end stop of the neutral position N and the second auxiliary piston 126 and the stop bushing 120 define a lower end stop of the neutral position N. Thus, the auxiliary pistons 125, 126 are overmolded pistons which touch the stop bushing 120 to limit the position of the main piston 135.

The rubber members 128 of the first auxiliary piston 125 and of the second auxiliary piston 126 provides sealing for the first pressure chamber 130 and the second pressure chamber 131, respectively.

The box control arrangement 100 comprises an elastic retaining element 150 being arranged and adapted to exert a force F, in the axial direction A, on the stop bushing 120. The elastic retaining element 150 is a spring washer 151. The spring washer 151 is further described with reference to Figure 3.

As shown in Figure 2, the elastic retaining element 150 is arranged radially outwardly from the stop bushing 120 and circumferentially around the stop bushing 120. I.e., the elastic retaining element 150 comprises a hole (not indicated) through which the stop bushing 120 projects. Thus, the elastic retaining element 150 is arranged circumferentially around and radially outwardly from the main piston 135.

The housing 105 comprises a first narrowing 106, and the stop bushing 120 is supported and/or confined by the first narrowing 106. The cover 115 comprises the radially extended support surface 116 and retaining element 150 is supported by the support surface 116. The force F pushes the stop bushing 120 against a first narrowing 106 of the housing 105 and the elastic retaining element 150 against a radially extended support surface 116 of the cover 115. In another embodiment (not shown), the aforementioned order may be interchanged: the force F pushes the stop bushing 120 against the radially extended support surface 116 of the cover 115 and the elastic retaining element 150 against the first narrowing 106 of the housing 105; the stop bushing is supported by the support surface 116 and the elastic retaining element 150 is arranged between the first narrowing 106 and the stop bushing 120.

In Figure 2, the housing 105 comprises a second narrowing 107 to save construction space. The second narrowing 107 and the stop bushing 120 may engage with each other to support the stop bushing 120. In another embodiment (not shown), the second narrowing 107 may be dispensed with.

Figure 3 shows a perspective view of a spring washer 151 of a gear box control arrangement 100 according to an aspect of the present invention. Such a gear box control arrangement 100 is described with reference to Figure 2. Figure 3 is described under reference to Figure 2.

The spring washer 151 comprises at least two windings 152. Therein, a winding 152 is a section of the spring washer 151 that circumferentially extends around the axial direction A. Each of the windings 152 are wound around the axial direction A. The spring washer 152 spirals around the axial direction A.

The spring washer 151 comprises an undulated contour. I.e., the windings 152 comprises a wave-shaped contour in the axial direction A along its circumference, which provides spring force F when compressed. I.e., the contour is coaxially undulated. The undulated contour and the number of windings 152 determine mechanical properties, including the height, i.e., the extension of the spring washer 151 in the axial direction A, of the axial direction A. The undulated contour, the number of windings 152 and the material of the spring washer 151 determine the stiffness and/or spring constant of the spring washer 151.

The spring washer 151 comprises a diameter from 40 mm to 80 mm, for example 60 mm. The spring washer 151 comprises a spring constant from 1 kN/mm to 2 kN/mm, for example 1,5 kN/mm. Therein, the spring constant is determined so that a force due to pressure by the pressurized air in the first pressure chamber 130 and/or the second pressure chamber 131 is less than the force F being exerted by the elastic spring washer 151 to prevent vibrations.

### List of reference signs (Part of the description)

- 100: gear box control arrangement
- 105: housing
- 106: first narrowing
- 107: second narrowing
- 108: annular section
- 110: push rod
- 115: cover
- 116: support surface
- 120: stop bushing
- 121: support member
- 125: first auxiliary piston
- 126: second auxiliary position
- 127: sheet metal member
- 128: rubber member
- 130: first pressure chamber
- 131: second pressure chamber
- 132: valve arrangement
- 133: engagement section
- 135: main piston
- 136: channel
- 140: mounting member
- 141: flange
- 150: retaining element
- 151: spring washer
- 152: winding
- 200a: vehicle
- 200b: utility vehicle
- 250: automated manual transmission system
- 260: gear box
- 270: gear box cover
- A: axis
- E: extraction position
- F: force
- N: neutral position
- R: retraction position

## Claims

1. Gear box control arrangement (100) for an automated manual transmission system (250) of a vehicle (200a), in particular utility vehicle (200b), comprising
- a cover (115),
- a main piston (135),
- a pushrod (110),
- a housing (105) for enclosing the main piston (135) and the pushrod (110) being movable by the main piston (135),
- an annular stop bushing (120) circumferentially enclosed by the housing (105) and adapted to define a neutral position (N), in an axial direction (A), of the main piston (135) within the housing (105), and
- an elastic retaining element (150) being arranged and adapted to exert a force (F), in the axial direction (A), on the stop bushing (120), wherein the housing (105) comprises a first narrowing (106), and the stop bushing (120) is supported and/or confined by the first narrowing (106), **characterized in that** the elastic retaining element (115) is a spring washer.

2. Gear box control arrangement (100) as claimed in claim 1, wherein the spring washer (115) is a Belleville spring, a curved disc spring, a wave washer, a split washer or a combination thereof.

3. Gear box control arrangement (100) as claimed in claim 1 wherein the spring washer (151) comprises at least two windings (152).

4. Gear box control arrangement (100) as claimed in any one of the preceding claims, wherein the elastic retaining element (150) is arranged circumferentially around and/or radially outwardly from the main piston (135).

5. Gear box control arrangement (100) as claimed in any one of the preceding claims, wherein the cover (115) comprises a radially extended support surface (116) and retaining element (150) or the stop bushing (120) is supported by the support surface (116), wherein the force (F) pushes the stop bushing (120) against the first narrowing (106) of the housing (105) or against a radially extended support surface (116) of the cover (115).

6. Automated manual transmission system (250) of a vehicle (200a), in particular utility vehicle (200b), comprising the gear box control arrangement as claimed in any one of the preceding claims.

7. Vehicle (200a), in particular utility vehicle (200b), comprising the gear box control arrangement (100) as claimed in any one of claims 1 to 5 and/or the automated manual transmission system (250) as claimed in claim 6.

## Patentansprüche

1. Getriebesteuerungsanordnung (100) für ein automatisiertes Schaltgetriebesystem (250) eines Fahrzeugs (200a), insbesondere Nutzfahrzeugs (200b), umfassend
- eine Abdeckung (115),
- einen Hauptkolben (135),
- eine Schubstange (110),
- ein Gehäuse (105) zum Umschließen des Hauptkolbens (135) und der durch den Hauptkolben (135) beweglichen Schubstange (110),
- eine ringförmige Anschlagbuchse (120), die umfangsmäßig von dem Gehäuse (105) umschlossen und geeignet ist, um eine Neutralposition (N) des Hauptkolbens (135) in einer axialen Richtung (A) innerhalb des Gehäuses (105) zu definieren, und
- ein elastisches Halteelement (150), das angeordnet und geeignet ist, um eine Kraft (F) in der axialen Richtung (A) auf die Anschlagbuchse (120) auszuüben, wobei das Gehäuse (105) eine erste Verengung (106) umfasst, und die Anschlagbuchse (120) durch die erste Verengung (106) gestützt und/oder begrenzt wird, **dadurch gekennzeichnet, dass** das elastische Halteelement (115) eine Federscheibe ist.

2. Getriebesteuerungsanordnung (100) nach Anspruch 1, wobei die Federscheibe (115) eine Tellerfeder, eine gewölbte Tellerfeder, ein Federring, eine Schlitzscheibe oder eine Kombination davon ist.

3. Getriebesteuerungsanordnung (100) nach Anspruch 1, wobei die Federscheibe (151) mindestens zwei Windungen (152) umfasst.

4. Getriebesteuerungsanordnung (100) nach einem der vorstehenden Ansprüche, wobei das elastische Halteelement (150) in Umfangsrichtung um den Hauptkolben (135) herum und/oder radial außerhalb davon angeordnet ist.

5. Getriebesteuerungsanordnung (100) nach einem der vorstehenden Ansprüche, wobei die Abdeckung (115) eine radial erweiterte Stützfläche (116) aufweist und das Halteelement (150) oder die Anschlagbuchse (120) durch die Stützfläche (116) abgestützt wird, wobei die Kraft (F) die Anschlagbuchse (120) gegen die erste Verengung (106) des Gehäuses (105) oder gegen eine radial erweiterte Stützfläche (116) der Abdeckung (115) drückt.

6. Automatisiertes Schaltgetriebesystem (250) eines Fahrzeugs (200a), insbesondere Nutzfahrzeugs (200b), umfassend die Getriebesteuerungsanordnung nach einem der vorstehenden Ansprüche.

7. Fahrzeug (200a), insbesondere Nutzfahrzeug (200b), umfassend die Getriebesteuerungsanordnung (100) nach einem der Ansprüche 1 bis 5 und/oder das automatisierte Schaltgetriebesystem (250) nach Anspruch 6.

## Revendications

1. Dispositif de commande de boîte de vitesses (100) pour un système de transmission manuelle automatisée (250) d'un véhicule (200a), en particulier d'un véhicule utilitaire (200b), comprenant
- une couverture (115),
- un piston principal (135),
- une tige de poussée (110),
- un boîtier (105) destiné à contenir le piston principal (135) et la tige de poussée (110) qui peut être déplacée par le piston principal (135),
- une douille de butée annulaire (120) entourée circonférentiellement par le boîtier (105) et adaptée pour définir une position neutre (N), dans une direction axiale (A), du piston principal (135) à l'intérieur du boîtier (105), et
- un élément de retenue élastique (150) disposé et adapté pour exercer une force (F), dans la direction axiale (A), sur la douille de butée (120), dans lequel le boîtier (105) comprend un premier rétrécissement (106), et la douille de butée (120) est supportée et/ou confinée par le premier rétrécissement (106),
**caractérisé en ce que** l'élément de retenue élastique (115) est une rondelle-ressort.

2. Dispositif de commande de boîte de vitesses (100) selon la revendication 1, dans lequel la rondelle élastique (115) est un ressort Belleville, un ressort à disque incurvé, une rondelle ondulée, une rondelle fendue ou une combinaison de ceux-ci.

3. Dispositif de commande de boîte de vitesses (100) selon la revendication 1, dans lequel la rondelle élastique (151) comprend au moins deux enroulements (152).

4. Dispositif de commande de boîte de vitesses (100) selon l'une quelconque des revendications précédentes, dans lequel l'élément de retenue élastique (150) est disposé circonférentiellement autour du piston principal (135) et/ou radialement à l'extérieur de celui-ci.

5. Dispositif de commande de boîte de vitesses (100) selon l'une quelconque des revendications précédentes, dans lequel le couvercle (115) comprend une surface d'appui radialement étendue (116) et un élément de retenue (150) ou la douille de butée (120) est supportée par la surface d'appui (116), dans lequel la force (F) pousse la douille de butée (120) contre le premier rétrécissement (106) du boîtier (105) ou contre une surface d'appui radialement étendue (116) du couvercle (115).

6. Système de transmission manuelle automatisée (250) d'un véhicule (200a), en particulier d'un véhicule utilitaire (200b), comprenant le dispositif de commande de boîte de vitesses selon l'une quelconque des revendications précédentes.

7. Véhicule (200a), en particulier véhicule utilitaire (200b), comprenant le dispositif de commande de boîte de vitesses (100) selon l'une quelconque des revendications 1 à 5 et/ou le système de transmission manuelle automatisée (250) selon la revendication 6.
